# EUROPÄISCHE PATENTSCHRIFT

(11) **EP 0 535 392 B1**
(45) Veröffentlichungstag und Bekanntmachung des Hinweises auf die Patenterteilung: **15.06.1994**
(21) Anmeldenummer: 92115133.8
(22) Anmeldetag: 04.09.1992
(51) Int. Cl.: B60T 17/22, B60T 8/00, B60T 13/66

(54) **Verfahren zur Diagnose einer elektronisch geregelten Druckmittel-Bremseinrichtung eines Fahrzeuges**
Diagnostic method for an electronically controlled fluid pressure brake installation of a vehicle
Procédé pour diagnostiquer une installation de freinage à fluide sous pression à commande électronique d'un véhicule

(30) Priorität: 02.10.1991 DE 4132767
(43) Veröffentlichungstag der Anmeldung: 07.04.1993
(73) Patentinhaber: MERCEDES-BENZ AG, 70327 Stuttgart (DE)
(72) Erfinder: Klein, Bodo, Dipl.-Ing., W-3013 Barsinghausen (DE); Fischer, Jörg, Dipl.-Ing., W-7300 Esslingen (DE)

(56) Entgegenhaltungen:
- EP-A- 0 357 922
- EP-A- 0 399 162
- DE-A- 3 337 800
- DE-A- 3 501 179
- DE-A- 4 004 502
- FR-A- 2 566 729

## Beschreibung

Die Erfindung betrifft ein Verfahren zur Diagnose einer elektronisch geregelten Druckmittel-Bremseinrichtung für wenigstens einen mehrkreisigen Bremskreis eines Fahrzeugs nach dem Oberbegriff des Anspruchs 1.

Eine gattungsgemäße Druckmittel-Bremseinrichtung ist bekannt (DE 35 01 179 A1). Der Vorteil derartiger Bremseinrichtungen besteht insbesondere darin, daß bei Ausfall eines elektropneumatischen Hauptbremskreises mit dem redundanten pneumatischen Nebenbremskreis ein Vollwertiger Bremskreis zur Ansteuerung der Radbremszylinder zur Verfügung steht. Da der redundante Nebenbremskreis bei intaktem Hauptbremskreis nicht verwendet wird, bliebe ein möglicher Defekt im Nebenbremskreis über einen längeren Zeitraum unerkannt, was in dem Fall des zusätzlichen Ausfalls des Hauptbremskreises - wobei eine Überwachung dessen elektronischer Regeleinrichtungen bekannt ist (DE 40 04 502 A1, Sp. 3, Z. 18 - 27) - zu kritischen Situationen führen könnte. Aus diesem Grunde wird bei der gattungsgemäßen Druckmittel-Bremseinrichtung beim Vorliegen eines definierten Betriebszustandes des Fahrzeuges - welcher durch Betätigen des Bremswertgebers bei Fahrtantritt oder bei Teilbremsungen gegeben ist - kurzzeitig die den elektropneumatischen Hauptbremskreis schaltende Elektromagnetventileinheit nicht angesteuert, so daß über den geschalteten pneumatischen Nebenbremskreis und den am Eingang zum Radbremszylinder angeordneten Drucksensor der redundante Bremsdruck erfaßt werden kann.

Auch ist es bekannt (DE 33 37 800 C2), neben dem am Radbremszylinder eingesteuerten Druckistwert mittels eines weiteren Drucksensors auch die Verfügbarkeit des pneumatischen Druckes im Nebenbremskreis, und zwar an der Schnittstelle Haupt-/Nebenbremskreis zu erfassen, so daß Ausfälle eines Teils der Bremssignale erkennbar sind und eine entsprechende Fahrerinformation durch Signalgabe möglich ist.

Aufgabe der Erfindung ist es, ein gattungsgemäßes Verfahren zur Diagnose einer Druckmittel-Bremseinrichtung, mittels welchem bereits eine generelle Aussage bezüglich der Funktionsfähigkeit des Nebenbremskreises möglich ist, so weiterzubilden, daß darüber hinaus auch Aussagen bezüglich der Funktionsfähigkeit einzelner Komponenten oder Baugruppen der Bremseinrichtung getroffen werden können.

Diese Aufgabe wird bei einer gattungsgemäßen Druckmittel-Bremseinrichtung mit den kennzeichnenden Verfahrensmerkmalen des Anspruches 1 gelöst, wobei die Merkmale der Unteransprüche vorteilhafte Aus- und Weiterbildungen kennzeichnen.

Ausführungsbeispiele der Erfindung sind in der Zeichnung dargestellt und werden im folgenden näher beschrieben. Es zeigt
- Fig. 1: ein Blockschaltbild eines mehrkreisigen Bremskreises,
- Fig. 2: ein erstes Flußdiagramm und
- Fig. 3: ein zweites Flußdiagramm bezüglich der diversen Verfahrensschritte.

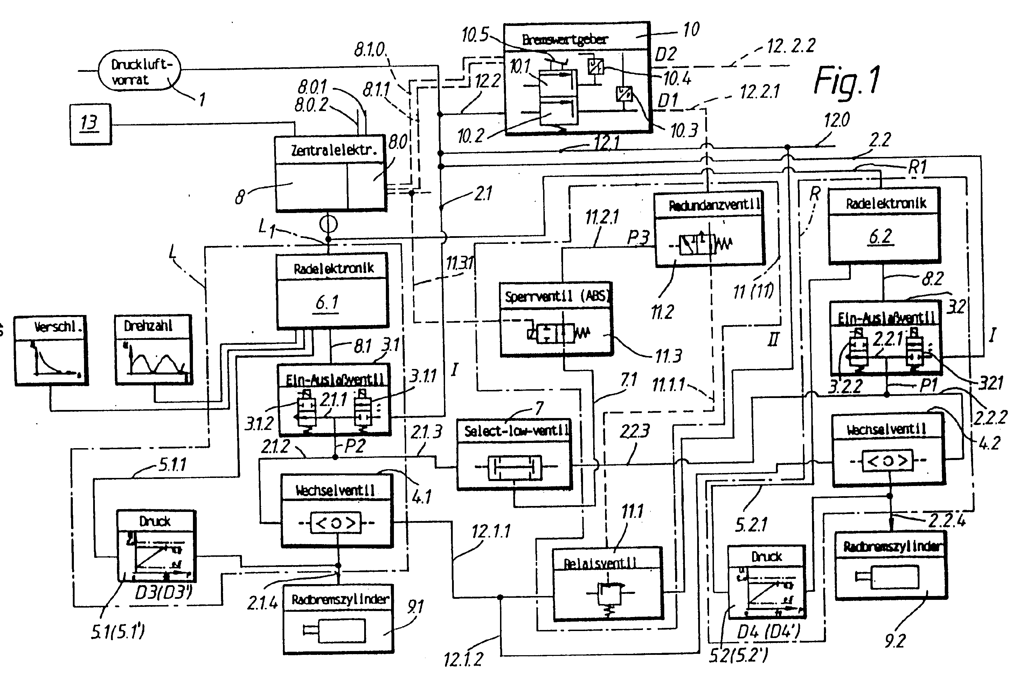

Fig. 1 zeigt ein schematisches Blockschaltbild einer elektronisch geregelten Druckmittel-Bremseinrichtung für ein Kraftfahrzeug, welche mit Druckluft als Druckmittel arbeitet und der Anschaulichkeit wegen lediglich aus einem mehrkreisigen Bremskreis mit zwei anzusteuernden Radbremszylindern besteht und beispielsweise die Anordnung an der Vorderachse sein kann.

Als Druckmittelquelle ist ein Druckluft-Vorratsbehälter 1 vorgesehen, der auf nicht dargestellte Weise mit Druckluft versorgt wird. Von diesem Vorratsbehälter 1 führt je eine Druckleitung 2.1, 2.2 zu einem als Einlaßventil 3.1.1, 3.2.1 wirkenden Elektromagnetventil einer Elektromagnetventileinheit 3.1, 3.2. Von den Einlaßventilen 3.1.1, 3.2.1 führt zum einen je eine Druckleitung 2.1.1., 2.2.1 zu einem als Auslaßventil 3.1.2, 3.2.2 wirkenden Elektromagnetventil der Elektromagnetventileinheit und zum anderen je eine Druckleitung 2.1.2, 2.2.2 auf den einen Eingang eines Wechselventils 4.1, 4.2 und je eine Druckleitung 2.1.3, 2.2.3 auf die Eingänge einer Doppelabsperreinrichtung 7 (Select-low-Ventil). Die Elektromagnetventileinheiten 3.1, 3.2 werden von einer elektronischen Regeleinrichtung 8 über die elektrischen Steuerleitungen 8.1, 8.2 angesteuert. Von dem Ausgang des Wechselventils 4.1, 4.2 führt je eine weitere Druckleitung 2.1.4, 2.2.4 zu den Radbremszylindern 9.1, 9.2 der zu bremsenden Räder beispielsweise der Vorderachse. Die vorstehend beschriebene Druckluftführung vom Vorratsbehälter 1 über die Druckleitung 2.1, 2.2, das Einlaßventil 3.1.1, 3.2.1, die Druckleitung 2.1.2, 2.2.2 zum Wechselventil 4.1, 4.2 wird als Hauptbremskreis I bezeichnet.

Vom Vorratsbehälter 1 führt eine weitere Druckleitung 12.1 auf den Eingang eines Relaisventils 11.1 einer Ventileinheit 11 und von dessen Ausgang führt eine Druckleitung 12.1.1 auf den anderen Eingang des Wechselventils 4.1 und eine Druckleitung 12.1.2 auf den anderen Eingang des Wechselventils 4.2; ferner führt vom Vorratsbehälter 1 eine Druckleitung 12.2 auf den Eingang eines Bremswertgebers 10, welcher zwei über das Bremspedal 10.5 betätigbare pneumatische Bremsdruckgeber 10.1, 10.2 und zwei diesen zugeordnete, als Druck-/Spannungs-Meßwandler ausgebildete elektrische Sollwertgeber 10.3, 10.4 aufweist. Je ein Bremsdruckgeber und Sollwertgeber sind hierbei einem Bremskreis zugeordnet, beispielsweise die beiden Geber 10.2, 10.3 dem dargestellten Vorderachsbremskreis und die beiden Geber 10.1, 10.4 dem nicht dargestellten, jedoch gleichermaßen aufgebauten Hinterachsbremskreis. Vom pneumatischen Bremsdruckgeber 10.2 wird ein der Bremspedalbetätigung proportionaler Bremsdruck-Sollwert ausgegeben und zum einen über die Pneumatische Steuerleitung 12.2.1 einem Eingang eines Redundanzventils 11.2 der Ventileinheit 11 zugeführt und zum anderen nach der Meßwandlerfunktion vom elektrischen Sollwertgeber 10.3 als elektrisches Signal über die elektrische Steuerleitung 8.1.0 der elektronischen Regeleinrichtung 8 zugeführt, ebenso wie dem Druck in den Radbremszylindern 9.1, 9.2 proportionale Signale über die Leitungen 5.1.1, 5.2.1, welche Signale über einen den Druckistwert aufnehmenden und in ein elektrisches Signal wandelnden Drucksensor 5.1, 5.2 gewonnen werden.

Die Elektromagnetventileinheit 3.1, das Wechselventil 4.1, der Drucksensor 5.1 und eine Radelektronik 6.1 bilden hierbei einen Radmodul L, beispielsweise für das linke Vorderrad. Ebenso ist ein Radmodul R, beispielsweise für das rechte Vorderrad durch die analogen Bauteile gebildet. Beide Radmodule L, R sind über Datenbusleitungen L1, R1 mit der elektronischen Regeleinrichtung 8 verbunden, von welcher des weiteren eine elektrische Steuerleitung 11.3.1 auf den Steueranschluß einen 2/2-Wege-Sperrventils 11.3 der Ventileinheit 11 führt, welches in seiner Ruhestellung die vom Ausgang der Doppelabsperreinrichtung 7 wegführende Drucksteuerleitung 7.1 mit der das Redundanzventil 11.2 pneumatisch ansteuernden Drucksteuerleitung 11.2.1 verbindet, welches wiederum in seiner Ruhestellung die pneumatische Steuerleitung 12.2.1 mit der auf den Steueranschluß des Relaisventils 11.1 führenden Drucksteuerleitung 11.1.1 verbindet.

Die vorstehend beschriebene Druckluftführung vom Vorratsbehälter 1 über die Druckleitung 12.1, das Relaisventil 11.1, die Druckleitung 12.1.1, 12.1.2 zum Wechselventil 4.1, 4.2 und die pneumatische Ansteuerung (pneumatischer Bremsdruckgeber 10.2, Steuerleitungen 12.2.1, 11.1.1 und Ventileinheit 11) werden als Nebenbremskreis II bezeichnet.

Die Funktion der Druckmittel-Bremseinrichtung ist nun folgende: Bei nicht betätigtem Bremswertgeber 10 liegen die in der Figur dargestellten Ventilstellungen vor.

Bei Betätigung des Bremspedals 10.5 wird vom pneumatischen Bremsdruckgeber 10.2 ein Bremsdruck-Sollwert ausgesteuert, welcher nach Wandlung im elektrischen Sollwertgeber 10.3 als Sollwert über die elektrische Steuerleitung 8.1.0 der elektronischen Regeleinrichtung 8 zugeführt wird. Diese sendet über die Leitungen L1, R1 und 8.1, 8.2 Steuersignale aus, durch welche das Auslaßventil 3.1.2, 3.2.2 geschlossen und das Einlaßventil 3.1.1, 3.2.1 geöffnet wird, wodurch Druckluft vom Vorratsbehälter 1, das Einlaßventil 3.1.1, 3.2.1 und das Wechselventil 4.1, 4.2 zum Radbremszylinder 9.1, 9.2 gelangt, dieser also über den Hauptbremskreis I mit Bremsdruck beaufschlagt wird. Gleichzeitig liegen diese sich in den Radbremszylindern aufbauenden Bremsdrücke über die Druckleitungen 2.1.3, 2.2.3 auch an der Doppelabsperreinrichtung 7 an, welche an ihrem Ausgang über die Drucksteuerleitung 7.1 den kleineren der beiden Bremsdrücke ausgibt, so daß dieser über das Sperrventil 11.3 und die Drucksteuerleitung 11.2.1 am Redundanzventil 11.2. anliegt und dieses umschaltet, da dessen Umschaltschwelle größer 0 bar, beispielsweise 0,5 bar, überschritten wurde.

Das umgeschaltete Redundanzventil 11.2 trennt sodann die Drucksteuerleitung 11.1.1 von der Drucksteuerleitung 12.2.1 ab, so daß das Relaisventil 11.1 nicht mit dem Bremsdruck-Sollwert angesteuert werden kann und somit der Nebenbremskreis II durch Abtrennung der Druckleitungen 12.1.1, 12.1.2 von der Druckleitung 12.1 gesperrt bleibt. Diese Funktionsweise ist deshalb gegeben, weil der elektrisch angesteuerte Hauptbremskreis um ein Vielfaches schneller reagiert als der pneumatisch angesteuerte Nebenbremskreis.

Erreicht dann der vom Drucksensor 5.1, 5.2 sensierte Druckistwert den Bremsdruck-Sollwert, wird das Einlaßventil 3.1.1, 3.2.1 geschlossen und der Druck im Radbremszylinder 9.1, 9.2 damit gehalten, sofern das Bremspedal mittlerweile keinen anderen Bremsdruck-Sollwert vorgibt. Mit dem Einlaß- und Auslaßventil kann der Bremsdruck im Radbremszylinder in an sich bekannter Weise beliebig aufgebaut, gehalten und wieder abgesenkt werden. Die Steuersignale dazu werden in an sich bekannter Weise in der elektronischen Regeleinrichtung 8 beispielsweise einer ABS- und/oder ALB- und/oder ASR-Regeleinrichtung - erzeugt, was hier nicht dargestellt ist, so daß von den Elektromagnetventileinheiten ein diesen Steuersignalen entsprechender Bremsdruck ausgesteuert werden kann.

Infolge der Ausbildung der Elektromagnetventile als Membranventile ist nicht damit zu rechnen, daß diese in ihrer Arbeitsstellung blockieren. Es ist demnach lediglich zu beachten, daß sie bei möglichen Defekten der elektronischen Regeleinrichtung (falsche Steuerbefehle) oder der Steuerleitungen (Leitungsbruch) in ihrer Arbeits- oder Ruhestellung verharren. Wenn das Einlaßventil 3.1.1, 3.2.1. nicht öffnet, sobald das Bremspedal 10.5 betätigt wird, bleibt auch das Redundanzventil 11.2 in seiner Ruhestellung, so daß der vom pneumatischen Bremsdruckgeber 10.2 ausgesteuerte Bremsdruck-Sollwert über das Redundanzventil 11.2 das Relaisventil 11.1 ansteuern kann, worauf Druckluft über die Druckleitungen 12.1, 12.1.1 und 12.1.2 und die Wechselventile 4.1, 4.2 an die Radbremszylinder 9.1., 9.2 gelangt, so daß über den redundanten Nebenbremskreis II gebremst werden kann.

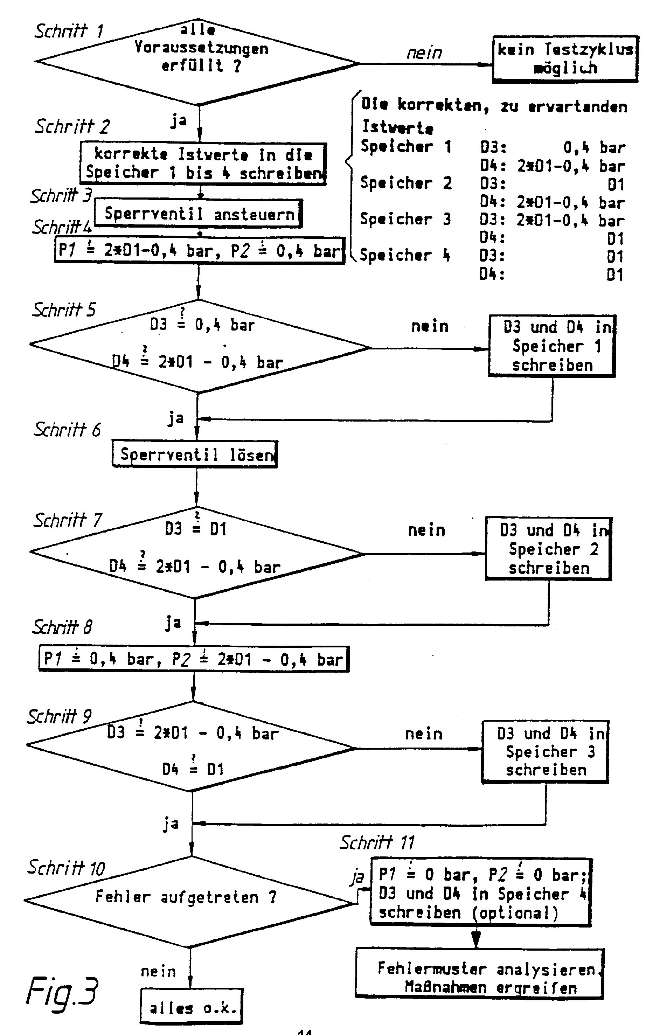

Dies ist auch dann der Fall, wenn das Auslaßventil 3.1.2, 3.2.2 nicht schließt, da dann im Hauptbremskreis I kein Druck entsteht und das Redundanzventil 11.2 ebenfalls in Ruhestellung verbleibt. Der Druckverlauf infolge Ventilansteuerung wird von der elektronischen Regeleinrichtung über den Drucksensor überwacht. Im Falle eines Defekts wird von der die Gesamtbremseinrichtung elektrisch/elektronisch überprüfenden Regeleinrichtung 8 im Rahmen von durchgeführten Prüfroutinen der Fehler erkannt und ein Fehlerstatussignal FS generiert, welches die elektronische Regeleinrichtung bezüglich des Steuerteiles abschaltet, was dem Fahrer über ein diesbezügliches Anzeigesignal signalisiert wird. Ein derartiges Prüfverfahren ist bekannt (DE 38 29 949 A1, wobei dort ein eventuelles Fehlerstatussignal auf der Ausgangsleitung 97, Fig. 3, ansteht). Die Betriebsbremse über den pneumatischen Nebenbremskreis II bleibt jedoch voll funktionsfähig.

Die Funktionsweise bei in die Druckmittel-Bremseinrichtung integriertem Antiblockiersystem (ABS) ist ferner noch folgende:

Findet im Rahmen einer Bremsung des Fahrzeuges über den Hauptbremskreis I, bei welcher wie zuvor beschrieben das Redundanzventil 11.2 aufgrund des Vorsteuerdruckes von beispielsweise 0,5 bar in seine Arbeitsstellung geschaltet hat und somit die Ansteuerung des Relaisventils 11.1. verhindert und der Nebenbremskreis II somit gesperrt ist, eine Antiblockierregelung statt, um das gebremste Rad vor dem Blockieren zu schützen, so kann im Rahmen der ABS-Regelung aufgrund der von der elektronischen Regeleinrichtung 8 angesteuerten Elektromagnetventileinheiten 3.1, 3.2 der Bremsdruck in den Druckleitungen 2.1.3 und/oder 2.2.3 für eine sehr kurze Zeitspanne unter die für das Umschalten des Redundanzventils 11.2 erforderliche Umschaltschwelle von beispielsweise 0,5 bar absinken, was ein Schalten des Redundanzventils 11.2 in seine Ruhestellung und ein Wirksamwerden des Nebenbremskreises II zur Folge hätte. Um dies zu verhindern, wird bei einer ABS-Regelung das Sperrventil 11.3 über die elektrische Steuerleitung 11.3.1 von der elektronischen Regeleinrichtung 8 spätestens dann angesteuert, wenn der Bremsdruck von oben her die Umschaltschwelle unterschreiten wird. Mit seiner Ansteuerung schaltet das Sperrventil 11.3 in seine Arbeitsstellung, in welcher es die Vorsteuerleitung 11.2.1 sperrt und somit der in dieser anstehende Vorsteuerdruck größer 0,5 bar gehalten wird, so daß das Redundanzventil 11.2 in seiner Arbeitsstellung verbleibt.

Wie aus vorstehender Beschreibung ersichtlich ist, wird bei intaktem elektropneumatischen Hauptbremskreis I der redundante pneumatische Nebenbremskreis II nicht wirksam, so daß ein Defekt in demselben über einen längeren Zeitraum unerkannt bleiben könnte.

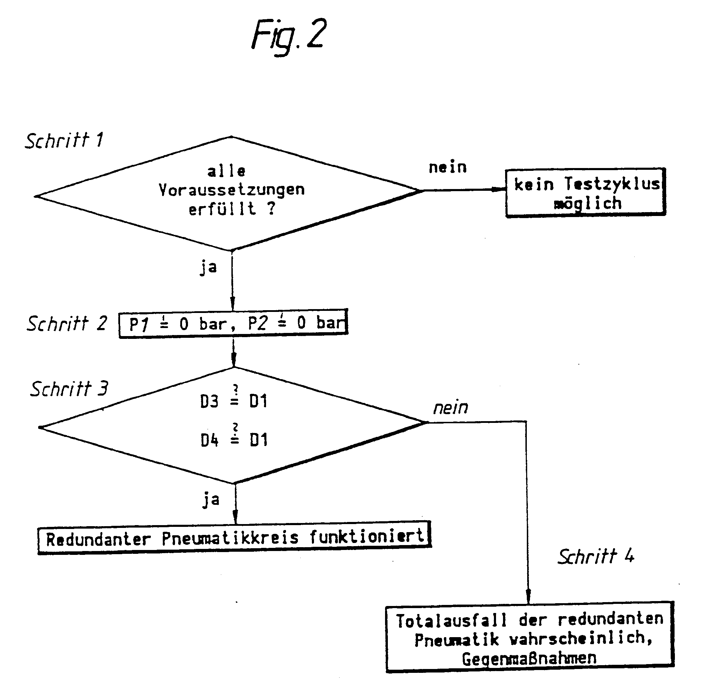

Eine Diagnose des Nebenbremskreises II wird nun wie folgt vorgenommen, siehe auch Fig. 2:
In der elektronischen Regeleinrichtung 8 ist ferner eine Diagnoseschalteinrichtung 8.0 vorgesehen, welche einen definierten Betriebszustand des Fahrzeuges in bezug auf die Druckmittel-Bremseinrichtung feststellt, dadurch, daß sie mindestens überprüft (Schritt 1 in Fig. 2)
- liegt ein Zündung-EIN-Signal 8.0.1 vor,
- ist die Fahrgeschwindigkeit v = 0 km/h
   (Signal 8.0.2 bspw. von einem Geschwindigkeitsgeber),
- liegt eine Betätigung der Betriebsbremse auf einen Bremsdruck-Sollwert größer einem definierten Bremsdruck-Sollwert (= Umschaltschwelle des Redundanzventils 11.2, gleich größer 0,5 bar im Ausführungsbeispiel) vor,
   (Signal auf Leitung 8.1.0 und/oder den Leitungen 5.1.1, 5.2.1).

Werden diese Mindestvoraussetzungen nicht erfüllt, ist ein Diagnosetestzyklus nicht möglich.

Sind diese Voraussetzungen erfüllt - hierbei ist der Hauptbremskreis I wirksam, der Nebenbremskreis II aufgrund des hierbei angesteuerten Redundanzventils 11.2 unwirksam -, wird von der Diagnoseschalteinrichtung 8.0 der Hauptbremskreis I dadurch unwirksam geschaltet, als von dieser initiiert über die elektronische Regeleinrichtung 8 Steuersignale ausgegeben werden, welche die Elektromagnetventileinheiten 3.1, 3.2 so ansteuern, daß Test-Drucksollwerte P1 und P2 an deren Ausgang von O bar ausgesteuert werden (Schritt 2 in Fig. 2). Dadurch entfällt auch der Vorsteuerdruck auf der Drucksteuerleitung 11.2.1, so daß das Redundanzventil 11.2 in seine Ruhestellung umschaltet, wodurch der vom pneumatischen Bremsdruckgeber 10.2 ausgesteuerte Bremsdruck-Sollwert D1 über das Redundanzventil 11.2 am Steuereingang des Relaisventils 11.1 ansteht und dieses analog auf Durchgang schaltet, so daß Druckmittel über die Druckleitungen 12.1, 12.1.1 und 12.1.2 und die Wechs elventile 4.1, 4.2 an die Radbremszylinder 9.1, 9.2 gelangt. Der Nebenbremskreis II ist also wirksam. Während dieser Diagnoseschaltung des Nebenbremskreises II wird nunmehr geprüft (Schritt 3 in Fig. 2), ob der am Drucksensor 5.1 erfaßte Druckistwert D3 und der am Drucksensor 5.2 erfaßte Druckistwert D4 mit dem am Bremswertgeber 10.2 ausgesteuerten Bremsdruck-Sollwert D1 - welcher ja als elektrische Größe aufgrund der Druck-/Spannungs-Wandlerfunktion des elektrischen Sollwertgebers 10.3 in der elektronischen Regeleinrichtung 8 vorliegt - übereinstimmt. Wenn ja, ist der redundante pneumatische Nebenbremskreis funktionsfähig; werden jedoch außerhalb eines Toleranzbandes liegende Druckabweichungen während der beiden Vergleiche festgestellt, so wird der Nebenbremskreis II als defekt erkannt und dies dem Fahrer durch Ansteuern einer Warneinrichtung 13 angezeigt (Schritt 4 in Fig. 2); parallel hierzu werden die während des Diagnosetestzyklus erfaßten Meßgrößen abgespeichert, um später als Diagnosedaten abgefragt werden zu können.

Eine weitere Diagnose der Druckmittel-Bremseinrichtung erfolgt jedoch des weiteren noch nach folgendem erfindungsgemäßen Verfahren, wie im Zusammenhang mit Fig. 3 beschrieben wird.

Ebenfalls nach Feststellung des zuvor genannten definierten Betriebszustandes durch die Diagnoseschalteinrichtung 8.0 (Schritt 1), werden in Speicher (1) bis (4) der Diagnoseschalteinrichtung "korrekte Druckistwerte" für D3 und D4 eingeschrieben (Schritt 2), welche Werte an den Drucksensoren 5.1, 5.2 dann zu erwarten sind, wenn zum einen die von der Diagnoseschalteinrichtung 8.0 initiierte elektronische Regeleinrichtung 8 entsprechende Steuersignale zur Ansteuerung der Elektromagnetventileinheiten 3.1, 3.2 ausgibt, welchen in der Diagnoseschalteinrichtung nach festgelegten Gleichungen - mit dem ausgesteuerten Bremsdruck-Sollwert D1 als Variable - bestimmte Test-Drucksollwerte entsprechen, die am Ausgang der Elektromagnetventileinheiten als P1 und P2 ausgesteuert werden, und wenn zum anderen der Nebenbremskreis II deaktiviert ist. Sodann wird von der Diagnoseschalteinrichtung über die elektrische Steuerleitung 11.3.1 das Sperrventil 11.3 aktiviert (Schritt 3), so daß dieses in seine Arbeitsstellung gelangt und die pneumatischen Drucksteuerleitungen 7.1 und 11.2.1 unterbricht, der in der Drucksteuerleitung 11.2.1 anstehende Vorsteuerdruck P3 also aufrechterhalten und das Redundanzventil 11.2 in seiner Arbeitsstellung bleibt, in welcher es den Nebenbremskreis II weiterhin sperrt. Aufgrund des im Schritt 1 feststellten definierten Betriebszustandes - mit der Annahme, daß der Bremswertgeber 10 vom Fahrer so betätigt wurde, daß ein Bremsdruck-Sollwert D1 von 1 bar ausgesteuert wird - , ergibt sich nach Ausführung des Schrittes 3 folgender momentane Zustand der Anlage:
D1 = P2 = D3 = P1 = D4 = P3 = 1 bar
Wechselventil 4.1 verbindet 2.1.2 mit 2.1.4
Wechselventil 4.2 verbindet 2.2.2 mit 2.2.4
Sperrventil 11.3 in Arbeitsstellung
Redundanzventil 11.2 in Arbeitsstellung (Nebenbremskreis II unwirksam).

In Abhängigkeit vom vorgegebenen und somit ausgesteuerten Bremsdruck-Sollwert D1 werden dann in der Diagnoseschalteinrichtung 8.0 Test-Drucksollwerte P1 und P2 nach den Gleichungen
P1 = 2.D1 - 0,4 bar
P2 = 0,4 bar
bestimmt (Schritt 4) - wobei der Wert 0,4 bar aus der zuvor im Ausführungsbeispiel festgelegten Umschaltschwelle von 0,5 bar für das Redundanzventil 11.2 resultiert und deshalb kleiner sein muß - , und sodann von der elektronischen Regeleinrichtung die Elektromagnetventileinheiten 3.1, 3.2 entsprechend angesteuert. Hierbei wird geprüft, ob sich Druckistwerte D3 = 0,4 bar und D4 = 2.D1 - 0,4 bar = 1,6 bar entsprechend den ausgesteuerten Test-Drucksollwerten P1 und P2 einstellen (Schritt 5). Wenn nein, werden die tatsächlichen Druckistwerte zuerst in den Speicher (1) eingeschrieben, in welchem die "korrekten Druckistwerte" für D3 und D4 abgelegt sind.

Im folgenden wird dann das Sperrventil 11.3 deaktiviert (Schritt 6), so daß dieses in seine Ruhestellung schaltet und die Verbindung der Drucksteuerleitungen 7.1 und 11.2.1 wieder herstellt, woraufhin auch das Redundanzventil 11.2 in seine Ruhestellung schaltet, da dessen Vorsteuerdruck P3 nur noch 0,4 bar (kleiner gleich der Umschaltschwelle 0,5 bar) beträgt, welcher Druck über die Doppelabsperreinrichtung 7 als P2 = 0,4 bar ansteht. Gleichzeitig gelangt nun aber auch der ausgesteuerte Bremsdruck-Sollwert D1 über das Redundanzventil 11.2 auf das Relaisventil 11.1, welches auf die Druckleitungen 12.1.1 und 12.1.2 - also über den Nebenbremskreis II - Druck entsprechend dem ausgesteuerten Bremsdruck-Sollwert D1 schaltet. Nach Ausführung dieses Schrittes 6 ergibt sich dann folgender momentane Zustand der Anlage:
P2 = 0,4 bar
Wechselventil 4.1 verbindet 12.1.1 mit 2.1.4
D3 = D1 = 1 bar?
Sperrventil 11.3 in Ruhestellung
Redundanzventil 11.2 in Ruhestellung
P1 = 1,6 bar
D4 = 1,6 bar?
Wechselventil 4.2 verbindet 2.2.2 mit 2.2.4.

Sodann wird von der Diagnoseeinrichtung geprüft (Schritt 7), ob der Bremsdruckistwert D3 gleich dem ausgesteuerten Bremsdruck-Sollwert D1 = 1 bar und der Bremsdruckistwert D4 = 2.D1 - 0,4 bar = 1,6 bar beträgt. Wenn nein, werden die Druckistwerte D3 und D4 zuerst in den Speicher (2) eingeschrieben, in welchem auch die bereits eingeschriebenen "korrekten Druckistwerte" D3 = D1 = 1 bar und D4 = 2.D1 - 0,4 bar = 1,6 bar abgelegt sind. Wenn ja, werden in Abhängigkeit vom vorgegebenen und somit ausgesteuerten Bremsdruck-Sollwert D1 in der Diagnoseschalteinrichtung 8.0 neue Test-Drucksollwerte P1 und P2 nach den Gleichungen
P1 = 0,4 bar
P2 = 2.D1 - 0,4 bar
bestimmt (Schritt 8). Im Vergleich mit den Test-Drucksollwerten im Schritt 4 ist ersichtlich, daß die Druckwerte von P1 und P2 nunmehr vertauscht sind und generell die Drucksollwerte derart asymmetrisch sind, daß sie in der Summe gleich dem doppelten vorgegebenen Bremsdruck-Sollwert D1 entsprechen. Sodann werden die Elektromagnetventileinheiten 3.1, 3.2 zur Aussteuerung der Test-Drucksollwerte P1 und P2 wieder entsprechend angesteuert und geprüft (Schritt 9), ob sich nunmehr Druckistwerte D3 = 2.D1 - 0,4 bar und D4 = D1 einstellen. Hierbei ist die Anlage im folgenden momentanen Zustand:
P2 = 1,6 bar
Wechselventil 4.1 verbindet 2.1.2 mit 2.1.4
D3 = 1,6 bar?
Sperrventil 11.3 in Ruhestellung
Redundanzventil 11.2 in Ruhestellung
P1 = 0,4 bar
D4 = D1 = 1 bar?
Wechselventil 4.2 verbindet 12.1.2 mit 2.2.4.

Wenn nein, werden die Druckistwerte D3 und D4 zuerst in den Speicher (3) eingeschrieben, in welchem auch die "korrekten Druckistwerte" D3 = 2.D1 - 0,4 bar und D4 = D1 = 1 bar abgelegt sind.

Sodann wird abgefragt (Schritt 10), ob während des Testzyklus Fehler aufgetreten sind, was von der Diagnoseschalteinrichtung dadurch feststellbar ist, wenn die in den Schritten 5, 7 und 9 erfaßten Druckistwerte nicht mit den "korrekten Druckistwerten" in den korrespondierenden Speichern (1), (2) und (3) übereinstimmen. Sind keine Fehler aufgetreten, ist die Funktion der Anlage sichergestellt und der Testzyklus beendet; sind Fehler aufgetreten, wird ebenfalls eine Warneinrichtung angesteuert. In der Kundendienstwerkstatt können dann anhand der in den entsprechenden Testzyklusphasen aufgetretenen Fehler durch Auslesen der Speicherinhalte die Fehler im Vergleich mit bekannten Fehlermustern analysiert werden und es kann auf den Ausfall einer oder mehrerer bestimmter Baugruppen der Anlage geschlossen werden.

In einer weiteren Ausgestaltung des zuvor in Verbindung mit Figur 3 beschriebenen Verfahrens kann diesem noch folgender Verfahrensschritt vorausgehen:

Wie bereits eingangs ausgeführt, ist im Bremswertgeber 10 in bekannter Weise des weiteren noch ein pneumatischer Bremsdruckgeber 10.1 und elektrischer Sollwertgeber 10.4 für einen gleichermaßen aufgebauten Bremskreis der nicht dargestellten Hinterachse vorhanden, zu deren Ventileinheit 11' einerseits die pneumatische Drucksteuerleitung 12.2.2 und andererseits die Druckleitung 12.0 führt. Ebenso führt vom elektrischen Sollwertgeber 10.4 eine elektrische Signalleitung 8.1.1 zur elektronischen Regeleinrichtung 8, 8.0.

Beim Vorliegen des von der Diagnoseschalteinrichtung 8.0 festgestellten definierten Betriebszustandes wird die Ventileinheit 11 von der Diagnoseschalteinrichtung durch Unwirksamschalten des intakten Hauptbremskreises I zunächst auf den Nebenbremskreis II geschaltet. Während dieser Diagnoseschaltung des Nebenbremskreises werden die über den Bremswertgeber 10 vorgegebenen mindestens zwei elektrischen Sollwertgeberwerte D1, D2 ..., welche über die elektrischen Signalleitungen 8.1.0 und 8.1.1 als elektrische Größen in der Diagnoseschalteinrichtung 8.0 vorliegen, und alle mit den Drucksensoren 5.1, 5.2 ... sensierten Druckistwerte D3, D4 ... in der elektronischen Regeleinrichtung 8 erfaßt und verglichen. In dem Fall, daß genau ein Wert um mehr als eine gültige Toleranz vom zu erwartenden "korrekten Druckistwert" abweicht, wird bereits in diesem vorausgehenden Verfahrensschritt der entsprechende Geber 10.3, 10.4 .../Sensor 5.1, 5.2 ... als defekt anerkannt und der Defekt zwischengespeichert, was dem Fahrer über die Warneinrichtung 13 signalisiert wird.

## Patentansprüche

1. Verfahren zur Diagnose einer elektronisch geregelten Druckmittelbremseinrichtung für wenigstens einen mehrkreisigen Bremskreis eines Fahrzeugs, welche umfaßt
- einen Bremswertgeber (10) mit einem pneumatischen Bremsdruckgeber (10.1, 10.2) und einem zugeordneten elektrischen Sollwertgeber (10.3, 10.4),
- einen Radbremszylinder (9.1, 9.2) für jedes Rad der in diesem Bremskreis zu bremsenden Räder,
welcher Radbremszylinder mittels des elektrischen Sollwertgebers und einer von einer elektronischen Regeleinrichtung (8) steuerbaren
Elektromagnetventileinheit (3.1, 3.2) über einen elektropneumatischen Hauptbremskreis (I) direkt oder mittels des pneumatischen Bremsdruckgebers über einen redundanten pneumatischen Nebenbremskreis (II) mit einer Druckmittelquelle (1) verbindbar ist, derart, daß bei Ausfall des Hauptbremskreises stets der redundante Nebenbremskreis über eine ansteuerbare Ventileinheit (11) geschaltet wird,
wobei am Eingang zum Radbremszylinder ein den Druckverlauf überwachender und mit der elektronischen Regeleinrichtung verbundener Drucksensor (5.1, 5.2) angeordnet ist,
- eine Diagnoseschalteinrichtung (8.0) zum Feststellen des Vorliegens eines definierten Betriebszustandes,
bei dessen Vorliegen durch Unwirksamschalten des intakten Hauptbremskreises auf den Nebenbremskreis geschaltet werden kann,
**dadurch gekennzeichnet,**
daß
a1) beim Vorliegen des von der Diagnoseschalteinrichtung (8.0) festgestellten definierten Betriebszustandes die besagte ansteuerbare Ventileinheit (11) von der Diagnoseschalteinrichtung automatisch auf Sperren des Nebenbremskreises (II) geschaltet wird,
a2) während dieser Diagnoseschaltung al) des Hauptbremskreises (I) über die Elektromagnetventileinheiten (3.1, 3.2)ein erster Test-Drucksollwert (P1) in einem Radbremszylinder (9.2) und ein hiervon unterschiedlicher zweiter Test-Drucksollwert (P2) in einem anderen Radbremszylinder (9.1) des besagten Bremskreises gleichzeitig ausgesteuert werden
und der ausgesteuerte erste Test-Drucksollwert (P1) mit dem von dem zugehörigen ersten Drucksensor (5.2) ermittelten ersten Druckistwert (D4) und der ausgesteuerte zweite TestDrucksollwert (P2) mit dem von dem zugehörigen zweiten Drucksensor (5.1) ermittelten zweiten Druckistwert (D3) verglichen werden,
a3) sodann die besagte ansteuerbare Ventileinheit (11) von der Diagnoseschalteinrichtung (8.0) automatisch auf den Nebenbremskreis (II) geschaltet wird, durch Unwirksamschalten des Hauptbremskreises (I),
a4) während dieser Diagnoseschaltung a3) des Nebenbremskreises (II) der über den pneumatischen Bremsdruckgeber (10.2) vorgegebene Bremsdruck-Sollwert (D1) mit dem zweiten Druckistwert (D3) des zweiten Drucksensors (5.1) und der erste Druckistwert (D4) des ersten Drucksensors (5.2) ist dem zugehörigen ausgesteuerten ersten Test-Drucksollwert (P1) verglichen werden,
und sodann über die Elektromagnetventileinheiten (3.1, 3.2) der erste (P1) und zweite Test-Drucksollwert (P2) vertauscht ausgesteuert werden und der über den pneumatischen Bremsdruckgeber (10.2) vorgegebene Bremsdruck-Sollwert (D1) mit dem ersten Druckistwert (D4) des ersten Drucksensors (5.2) und der zweite Druckistwert (D3) des zweiten Drucksensors (5.1) mit dem zugehörigen ausgesteuerten zweiten TestDrucksollwert (P2) verglichen werden, und
a5) bei außerhalb von zu erwartenden "korrekten Druckistwerten" liegenden gemessenen Druckistwerten (D3, D4, ...) in den einzelnen Vergleichsstufen bestimmte Baugruppen oder einzelne Komponenten der Druckmittel-Bremseinrichtung als defekt erkannt werden, Defekte komponentenbezogen zwischengespeichert werden und eine Warneinrichtung angesteuert wird.

2. Verfahren nach Anspruch 1,
**gekennzeichnet durch**
folgenden, dem Verfahrensschritt al) vorausgehenden Schritt, wonach beim Vorliegen des von der Diagnoseschalteinrichtung (8.0) festgestellten definierten Betriebszustands die besagte ansteuerbare Ventileinheit (11) von der Diagnoseschalteinrichtung durch Unwirksamschalten des intakten Hauptbremskreises (I) zunächst auf den Nebenbremskreis (II) geschaltet wird,
sodann die über den Bremswertgeber (10) vorgegebenen mindestens zwei elektrischen Sollwertgeberwerte (D1, D2, ... 8.1.0, 8.1.1 ...) der elektrischen Sollwertgeber (10.3, 10.4, ...) und alle mit den Drucksensoren (5.1, 5.2, ...) sensierten Druckistwerte (D3, D4, ...) in der elektronischen Regeleinrichtung (8) erfaßt und verglichen werden und für den Fall, daß genau ein Wert um mehr als eine gültige Toleranz vom zu erwartenden "korrekten Druckistwert" abweicht, der entsprechende elektrische Sollwertgeber (10.3, 10.4, ...)/Drucksensor (5.1, 5.2, ...) als defekt erkannt wird, so erkannte Defekte zwischengespeichert werden und eine Warneinrichtung (13) angesteuert wird.

3. Verfahren nach Anspruch 1 oder 2,
**dadurch gekennzeichnet**,
daß der definierte Betriebszustand beim Vorliegen mindestens folgender Bedingungen gegeben ist:
eingeschaltete Zündung des Fahrzeuges (8.0.1),
eine Fahrzeuggeschwndigkeit von 0 km/h (8.0.2),
und eine Betätigung des Bremswertgebers (10) auf einen Bremsdruck-Sollwert (D1) größer einem definierten BremsdruckSollwert (P3).

4. Verfahren nach Anspruch 2,
**dadurch gekennzeichnet**,
daß in dem definierten Betriebszustand die von der elektronischen Regeleinrichtung (8) und die Elektromagnetventileinheiten (3.1, 3.2) auszusteuernden Test-Drucksollwerte (P1, P2) für die in dem Bremskreis liegenden Radbremszylinder (9.1, 9.2) von der Diagnoseschalteinrichtung (8.0) auf 0 bar festgelegt werden und dadurch die automatische Umschaltung bewirkt wird.

5. Verfahren nach Anspruch 1,
**dadurch gekennzeichnet,**
daß über die Elektromagnetventileinheiten (3.1, 3.2) die unterschiedlichen Test-Drucksollwerte (P1, P2) asymmetrisch, bei in der Summe gleich dem doppelten vorgegebenen Bremsdruck-Sollwert (D1) ausgesteuert werden.

6. Verfahren nach Anspruch 1,
**dadurch gekennzeichnet**,
daß bei Defekterkennung ferner die von den Elektromagnetventileinheiten (3.1, 3.2) auszusteuernden TestDrucksollwerte (P1, P2) auf 0 bar festgelegt werden und während dieser Diagnoseschaltung a3) des Nebenbremskreises (II) der Bremsdruck-Sollwert (D1) mit den von den Drucksensoren (5.1, 5.2) ermittelten Druckistwerten (D3, D4) verglichen wird und bei einer außerhalb eines Toleranzbandes liegenden Druckabweichung ein Defekt im Nebenbremskreis (II) bestätigt wird.

## Claims

1. A diagnostic process for an electronically controlled compressed air brake device for at least one multi-circuited brake circuit in a vehicle, consisting of
- a brake transducer (10) with a pneumatic brake pressure transducer (10.1, 10.2) and an associated electric set-point adjustor (10.3, 10.4),
- a wheel brake cylinder (9.1, 9.2) for each of the wheels to be braked in this circuit,
which wheel brake cylinder can be connected by the electric set-point adjustor and a solenoid valve unit (3.1, 3.2) controlled by an electronic regulating device via an electro-pneumatic primary brake circuit (I) either directly or by means of the pneumatic brake pressure transducer via a redundant pneumatic secondary circuit (II) to a compressed air source (1) in such a way that when the primary brake circuit fails the redundant secondary brake circuit is always triggered by a controllable valve unit (11),
whereby at the inlet to the wheel brake cylinder is located a -pressure sensor (5.1, 5.2) which monitors the compressed air and is connected to the electronic regulating device,
- a diagnostic switching device (8.0) to detect the presence of a defined operating status,
which, when such a status occurs, can be switched to the secondary brake circuit by disabling the intact primary brake circuit,
**characterised in that**
a1) when the diagnostic switching device (8.0) detects the defined operating status the said controllable valve unit (11) is automatically triggered to block the secondary brake circuit (II) by the diagnostic switching device,
a2) during this diagnostic operation al) of the primary brake circuit (I) a first test pressure set-point (P1) in a wheel brake cylinder (9.2) and different second test pressure set-point (P2) in another wheel brake cylinder (9.1) in the said brake circuit are simultaneously selected by the solenoid valve units (3.1, 3.2)
and the selected first test pressure set-point (P1) is compared with the first actual pressure value (D4) recorded by the first pressure sensor (5.2) and the second test pressure set-point (P2) is compared with the second actual pressure value (D3) recorded by the second pressure sensor (5.1),
a3) whereupon the said controllable valve unit (11) is automatically switched by the diagnostic switching device (8.0) to the secondary brake circuit (II) by the disabling of the primary brake circuit (I),
a4) during this diagnostic operation a3) of the secondary brake circuit (II) the brake pressure set-point (D1) preset by the pneumatic brake pressure transducer (10.2) is compared with the second actual pressure value (D3) from the second pressure sensor (5.1) and the first actual pressure value (D4) from the first pressure sensor (5.2) is compared with the selected first test pressure set-point (P1),
and whereupon the first (P1) and the second (P2) test pressure set-points are interchanged by the solenoid valve units (3.1, 3.2) and the brake pressure set-point (D1) preset by the pneumatic brake pressure transducer (10.2) is compared with the first actual pressure value (D4) from the first pressure sensor (5.2) and the second actual pressure value (D3) from the second pressure sensor (5.1) is compared with the selected second test pressure set-point (P2) and
a5) if the actual pressure values (D3, D4, ...) measured lie outside the expected "correct actual pressure values" in the individual comparative stages certain sub-assemblies or individual components in the compressed air brake device are recognised as defective, component-specific defects are buffer-stored and a warning device is triggered.

2. A process as per claim 1,
**characterised by**
the following steps, prior to process step al), in which when the diagnostic switching device (8.0) detects the defined operating status the said controllable valve unit (11) is switched to the secondary brake circuit (II) by the diagnostic switching device by disabling the intact primary brake circuit (I),
whereupon the at least two electric set-point adjustor values (D1, D2, ... 8.1.0, 8.1.1,...) from the electric set point adjustor (10.3, 10.4, ...) preset by the brake transducer (10) and all the actual pressure values (D3, D4, ...) measured by the pressure sensors (5.1, 5.2, ...) are recorded and compared and, if a particular value deviates by more than a valid tolerance from the expected "correct actual pressure value", the corresponding electric set-point adjustor (10.3, 10.4, ...)/pressure sensor (5.1, 5.2, ...) is recognised as defective and the recognised defects are buffer-stored and a warning device is triggered.

3. A process as per claim 1 or 2,
**characterised in that**
the defined operating status exists when the following conditions occur:
the vehicle ignition is on (8.0.1),
the vehicle speed is 0 km/h (8.0.2)
and the brake transducer (10) is actuated at a brake pressure set-point (D1) greater than a defined brake pressure set-point (P3).

4. A process as per claim 2,
**characterised in that**
in the defined operating status the test pressure set-points (P1, P2) to be selected by the electronic regulating device (8) and the solenoid valve units (3.1, 3.2) for the wheel brake cylinder (9.1, 9.2) are set to 0 bar by the diagnostic switching device (8.0) thus triggering the automatic changeover.

5. A process as per claim 1,
**characterised in that**
the different test pressure set-points (P1, P2) are selected by the solenoid valve units (3.1, 3.1) asymmetrically at values the sum of which is equal to twice the preset brake pressure set-point (D1).

6. A process as per claim 1,
**characterised in that**
during defect recognition the test pressure set-points (P1, P2) to be selected by the solenoid value units (3.1, 3.2) are also set at 0 bar and during this diagnostic switching operation a3) of the secondary brake circuit (II) the brake pressure set-point (D1) is compared with the actual pressure values (D3, D4) recorded by the pressure sensors (5.1, 5.2) and if the pressure deviation is outside a tolerance range a defect is confirmed in the secondary brake circuit (II).

## Revendications

1. Procédé pour diagnostiquer un dispositif de freinage à fluide sous pression, à régulation électronique, pour au moins un circuit multiple de freinage d'un véhicule automobile et qui comprend
- un transmetteur (10) de la valeur de freinage, qui est équipé d'un générateur pneumatique (10.1, 10.2) de la pression de freinage et d'un générateur électrique associé de valeurs de consigne (10.3, 10.4),
- un cylindre de frein de roue (9.1, 9.2) pour chacune des roues devant être freinées dans ce circuit de freinage,
lequel cylindre de frein de roue peut être raccordé, au moyen du générateur électrique de valeurs de consigne et d'une unité à soupapes électromagnétiques (3.1, 3.2), commandable par un dispositif de régulation électronique (8), et par l'intermédiaire d'un circuit de freinage électropneumatique principal (I), directement ou au moyen du générateur pneumatique de pression de freinage, par l'intermédiaire d'un circuit de freinage pneumatique secondaire redondant (II), à une source (1) du fluide sous pression de telle sorte que, dans le cas d'une défaillance du circuit de freinage principal, le circuit de freinage secondaire redondant est toujours branché par l'intermédiaire d'une unité à soupape commandable (11) ,
tandis qu'un capteur de pression (5.1, 5.2), qui contrôle l'allure en pression et est relié au dispositif de régulation électronique, est disposé à l'entrée du cylindre de frein de roue,
- un dispositif de commutation de diagnostic (8.0) servant à déterminer la présence d'un état de fonctionnement défini,
lors de la présence duquel une commutation peut être réalisée sur le circuit de freinage secondaire, par inactivation du circuit de freinage principal intact,
caractérisé en ce que
a1) dans le cas de la présence de l'état de fonctionnement défini, qui est fixé par le dispositif de commutation de diagnostic (8.0), ladite unité à soupape commandable (11) est activée automatiquement, par le dispositif de commutation de diagnostic, pour le blocage du circuit de freinage secondaire (II),
a2) pendant cette commutation de diagnostic (a1) du circuit de freinage principal (I), une première valeur de consigne de pression de test (P1) dans un cylindre de frein de roue (9.2) et une seconde valeur de consigne de pression de test (P2), différente de la précédente, dans un autre cylindre de frein de roue (9.1) dudit circuit de freinage sont commandées simultanément par l'intermédiaire des unités à soupapes électromagnétiques (3.1, 3.2), et
la première valeur de consigne de pression de test commandée (P1) est comparée à la première valeur réelle de pression (D4), déterminée par le premier capteur de pression associé (5.2), et la seconde valeur de consigne de pression de test commandée (P2) est comparée à la seconde valeur réelle de pression (D3) déterminée par le second capteur de pression associé (5.1),
a3) ensuite ladite unité à soupape commandable (11) est commutée automatiquement, par le circuit de commutation de diagnostic (8.0), sur le circuit de freinage auxiliaire (II), par inactivation du circuit de freinage principal (I),
a4) pendant cette commutation de diagnostic a3) du circuit de freinage secondaire (II), la valeur de consigne de pression de freinage (D1), qui est prédéterminée par l'intermédiaire du générateur pneumatique de pression de freinage (10.2), est comparée à la seconde valeur réelle de pression (D3) du second capteur de pression (5.1), et la première valeur réelle de pression (D4) du premier capteur de pression (5.2) est comparée à la première valeur de consigne de pression de test commandée associée (P1), et
ensuite la première valeur de consigne de pression de test (P1) et la seconde valeur de consigne de pression (P2) sont commandées d'une manière permutée par l'intermédiaire des unités à soupapes électromagnétiques (3.1, 3.2), et la valeur de consigne de pression de freinage (D1), prédéterminée par l'intermédiaire du générateur pneumatique de pression de freinage (10.2), est comparée à la première valeur de pression (D4) du premier capteur de pression (5.2), et la seconde valeur réelle de pression (D3) du second capteur de pression (5.2) est comparé à la seconde valeur de consigne de pression commandée associée (P2), et
a5) dans le cas où des valeurs réelles de pression mesurées (D3, D4, ...) sont situées à l'extérieur de "valeurs réelles de pression correctes" auxquelles on peut s'attendre, dans les différents étages comparateurs, des modules déterminés ou des composants individuels du dispositif de freinage à fluide sous pression sont identifiés comme défectueux, des défauts en rapport avec les composants sont mémorisés temporairement et un dispositif d'avertissement est commandé.

2. Procédé selon la revendication 2, caractérisé par
l'étape suivante, qui précède l'étape opératoire a1) et lors de laquelle, dans le cas de la présence de l'état de fonctionnement défini fixé par le dispositif de commutation de diagnostic (8.0), ladite unité à soupape commandable (11) est tout d'abord connectée au circuit de freinage secondaire (II) par le dispositif de commutation de diagnostic, au moyen de l'inactivation du circuit de freinage principal intact (I),
ensuite les au moins deux valeurs électriques (D1, D2, ... 8.1.0, 8.1.1 ...), prédéterminées par l'intermédiaire du transmetteur de valeurs de freinage (10), du générateur électrique de valeurs de consigne (10.3, 10.4, ...) et toutes les valeurs de pression (D3, D4, ...) détectées avec les capteurs de pression (5.1, 5.2, ...) dans le dispositif de régulation électronique (8) sont détectées et comparées et, dans le cas où précisément une valeur supérieure à une tolérance admissible s'écarte de la "valeur réelle de pression correcte", à laquelle on peut s'attendre, le générateur électrique de valeurs de consigne (10.1, 10.4, ...)/capteur de pression (5.1, 5.2, ...) correspondant est identifié comme défectueux de sorte que des défauts identifiés sont mémorisés temporairement et qu'un dispositif d'avertissement (13) est commandé.

3. Procédé selon la revendication 1 ou 2, caractérisé en ce que l'état de fonctionnement défini est déterminé dans le cas de la présence au moins des conditions suivantes :
allumage activé du véhicule (8.0.1),
vitesse du véhicule = 0 km/h (8.0.2),
et un actionnement du transmetteur de la valeur de freinage (10) dans le cas d'une valeur de consigne de la pression de freinage (D) supérieure à une valeur de consigne définie de la pression de freinage (P3).

4. Procédé selon la revendication 2, caractérisé en ce que dans l'état de fonctionnement défini, les valeurs de consigne de pression de test (P1, P2), qui doivent être commandées par le dispositif de régulation électronique (8) et par les unités à soupapes électromagnétiques (3.1, 3.2) pour les cylindres de frein de roues (9.1, 9.2), qui sont situés dans le circuit de freinage, sont fixées par le dispositif de commutation de diagnostic (8.0) à 0 bar et que de ce fait la commutation automatique est activée.

5. Procédé selon la revendication 1, caractérisé en ce que les différentes valeurs de consigne de pression de test (P1, P2) sont commandées de façon dissymétrique par l'intermédiaire des unités à soupapes électromagnétiques (3.1, 3.2), dans le cas où la somme est égale au double de la valeur de consigne prédéterminée de la pression de freinage (D1).

6. Procédé selon la revendication 1, caractérisé en ce que dans le cas de la détection d'un défaut, les valeurs de consigne de la pression de test (P1, P2), qui doivent être commandées par les unités à soupapes électromagnétiques (3.1, 3.2), sont fixées à O bar et, pendant cette commutation de diagnostic (a3) du circuit de freinage auxiliaire (II), la valeur de consigne (D1) de la pression de freinage est comparée aux valeurs réelles de pression (D3, D4) déterminées par les capteurs de pression (5.1, 5.2), et la présence d'un défaut dans le circuit de freinage secondaire (II) est confirmée dans le cas où il existe un écart de pression à l'extérieur d'une bande de tolérance.
